Europäisches Patentamt

European Patent Office

Office européen des brevets

(19)

(11) Publication number: **0 130 821**
**B1**

## EUROPEAN PATENT SPECIFICATION

(12)

(45) Date of publication of patent specification: **07.09.88**

(51) Int. Cl.⁴: **A 23 L 1/237**, A 23 L 1/22

(21) Application number: **84304484.3**

(22) Date of filing: **29.06.84**

(54) **Coated-particle salt substitute containing potassium chloride coated with maltodextrin and method of preparation.**

<table>
<tr><td>

(30) Priority: **30.06.83 US 509844**
**30.06.83 US 509848**
**30.06.83 US 509846**

(43) Date of publication of application:
**09.01.85 Bulletin 85/02**

(45) Publication of the grant of the patent:
**07.09.88 Bulletin 88/36**

(84) Designated Contracting States:
**AT BE CH DE FR GB IT LI LU NL SE**

(56) References cited:
**FR-A-1 051 878**
**GB-A-1 275 540**
**GB-A-2 058 541**
**US-A-3 514 296**

</td><td>

(73) Proprietor: **Mallinckrodt, Inc. (a Delaware corporation)**
**675 McDonnell Boulevard P.O. Box 5840**
**St. Louis Missouri 63134 (US)**

(72) Inventor: **Bell, Alexis D.**
**5710 Neosho Street**
**St. Louis Missouri 63109 (US)**
Inventor: **Meyer, David R.**
**13524 Coliseum Drive**
**Chesterfield Missouri 63017 (US)**

(74) Representative: **Eyles, Christopher Thomas et al**
**BATCHELLOR, KIRK & EYLES 2 Pear Tree Court**
**Farringdon Road**
**London, EC1R 0DS (GB)**

</td></tr>
</table>

Courier Press, Leamington Spa, England.

# 0 130 821

## Description

The present invention relates to a coated particle composition useful as a substitute for salt.

There are a number of salt substitute compositions which are described in the literature and/or are available commercially containing potassium chloride with and without sodium chloride. Such compositions have been proposed for people who seek to eliminate or minize the amount of sodium chloride in their diet due to medical necessity or for other reasons. However, the heretofore known salt substitutes have not been entirely satisfactory from the standpoints of similarity to common salt (i.e. sodium chloride) in taste and appearance. Accordingly, there is a substantial need in the art for an improved salt substitute composition.

In our copending European Patent Application No. 84304485.0, filed concurrently herewith there is described a salt substitute composition which comprises a uniform admixture comprising as particulate components thereof:

(a) potassium chloride and

(b) maltodextrin,

wherein the dextrose equivalent (D.E.) of the admixture is not more than 10 D.E. units.

It has now been found unexpectedly that a salt substitute composition including potassium chloride coated with a maltodextrin-including coating can be prepared and that the composition at least closely approaches the taste and appearance of salt and substantially fulfills the above-mentioned need.

Generally stated, the present invention provides a salt substitute composition which comprises coated particles, each particle comprising:

(a) a core comprising potassium chloride and

(b) a coating on said core, said coating comprising maltodextrin,

wherein the dextrose equivalent (D.E.) of the combined core and coating is not more than 10 D.E. units.

According to a preferred aspect of the invention there is provided a salt substitute composition which comprises coated particles, each particle comprising:

(a) a core comprising potassium chloride and

(b) a coating on said core, said coating comprising maltodextrin and being free of sodium chloride, wherein the dextrose equivalent (D.E.) of the combined amount of potassium chloride and maltodextrin is not more than 10 D.E. units.

The invention further provides a salt substitute composition which comprises coated particles, each particle comprising:

(a) a core comprising potassium chloride and

(b) a coating on said core, said coating comprising a mixture containing:

(i) maltodextrin and

(ii) sodium chloride, wherein the dextrose equivalent (D.E.) of the combined amount of potassium chloride, maltodextrin and sodium chloride is not more than 10 D.E. units.

In another of its aspects the invention provides a salt substitute composition which comprises coated particles, each particle comprising:

(a) a core comprising potassium chloride and

(b) a coating on said core, said coating comprising a mixture containing:

(i) maltodextrin and

(ii) cream of tartar,

wherein the dextrose equivalent (D.E.) of the combined amount of potassium chloride maltodextrin and cream of tartar is not more than 10 D.E. units.

In an embodiment, the above salt substitute composition of this invention may further include sodium chloride. In this embodiment, the D.E. of the combined amount of potassium chloride, maltodextrin, cream of tartar and sodium chloride is preferably not more than 10 D.E. units.

As used herein, the term "particle" includes extremely small pieces of matter and small agglomerates or clusters thereof. As used herein with reference to a material, the terms "dextrose equivalent" and "D.E." means the total amount of reducing sugars (calculated as dextrose) in the material, which amount is expressed as a percent of the total weight (dry basis) of the material. Such percent is referred to herein as "D.E. units". (Reducing sugars include, e.g., all monosaccharides; maltose; cellobiose; and lactose. Sucrose is a non-reducing sugar.) The D.E. of a material consisting of two or more components can be calculated by multiplying the weight fraction ("w.f.") of each component of the material by the D.E. of such component and adding the resulting products of multiplication. For example, a material consisting of 20% (0.20 w.f.) component A having a D.E. of 10 D.E. units and 80% (0.80 w.f.) component B having a D.E. of zero has a D.E. of 2 (0.20×10+0.80×0) D.E. units.

The salt substitute of the present invention contains at least two essential components, namely potassium chloride and maltrodextrin, as indicated above. In addition the coating may include sodium chloride and/or cream of tartar. In general, these components may be combined in any relative proportions in accordance with the teachings hereof to prepare a broad range of salt substitutes useful for a wide variety of end use applications, e.g., for table salt, inclusion in snack foods (e.g., pretzels, potato chips (potato crisps), corn chips (corn crisps), etc.), cereals, baked goods and other edible compositions such as those which heretofore have included common salt (i.e., sodium chloride) as an ingredient thereof. In use,

2

the salt substitutes of the present invention may be substituted in whole or in part for the common salt component of heretofore known edible compositions.

When the salt substitute includes only the two components potassium chloride and maltodextrin these may be present in the below indicated amounts:

potassium chloride: from about 99 to about 60%,
maltodextrin: from about 1 to about 40%,
wherein the percentage amounts are by weight based on the combined weight of said components.

As a general preference, the potassium chloride component in such a two component composition is included in an amount from about 90 to about 70% and the maltodextrin component is included in an amount from about 10 to about 30% wherein the percentage amounts are by weight based on the combined weight of these components.

More preferably, the potassium chloride is included in such a two component composition in an amount from about 85 to about 80% and the maltodextrin is included in an amount from about 15 to about 20%, such percentages being by weight and on the aforesaid basis (i.e., the combined total weight of these components being 100% by weight).

When the salt substitute includes the three components potassium chloride, maltrodextrin and sodium chloride these may be present in the below indicated amounts:

potassium chloride: from about 90 to about 19%,
maltodextrin: from about 1 to about 40%, and
sodium chloride: from about 0.1 to about 75%,
wherein the percentage amounts are by weight based on the combined weight of said ingredients.

As a general preference, the potassium chloride component is included in such a three component composition in an amount from about 90 to about 20%, the maltodextrin component is included in an amount from about 10 to about 30%, and the sodium chloride component is included in an amount from about 1 to about 50%, wherein the percentage amounts are by weight based on the combined weight of the three components set forth above.

More preferably, the potassium chloride is included in such a three component composition in an amount from about 85 to about 65%, the maltodextrin is included in an amount from about 15 to about 20%, and the sodium chloride is included in an amount from about 3 to about 15%, such percentages being by weight and on the aforesaid basis (i.e., the combined total weight of these three components being 100% by weight).

When the salt substitute includes the three components potassium chloride, maltrodextrin and cream of tartar these may be present in the below indicated amounts:

potassium chloride: from about 91 to about 59%,
maltodextrin: from about 1 to about 40%, and
cream of tartar: from about 0.1 to about 0.9%,
wherein the percentage amounts are by weight based on the combined weight of said ingredients.

As a general preference, the potassium chloride component is included in such three component compositions in an amount from about 90 to about 69%, the maltodextrin component is included in an amount from about 10 to about 30%, and the cream of tartar component is included in an amount from about 0.1 to about 0.7%, wherein the percentage amounts are by weight based on the combined weight of these components.

More preferably, the potassium chloride is included in an amount from about 85 to about 80%, the maltodextrin is included in an amount from about 15 to about 20%, and the cream of tartar is included in an amount from about 0.1 to about 0.5%, such percentages being by weight and on the aforesaid basis (i.e., the combined total weight of these three components being 100% by weight).

For human consumption of the salt-substitute compositions, all ingredients employed should be humanly edible, e.g., Food Chemical Codex grade.

The salt substitutes may be prepared from raw material ingredients having any suitable particle sizes.

Preferably, the particle size of the potassium chloride employed is from about 20 (850 μm) to about 60 (250 μm) mesh (U.S. sieve size). Excellent tasting salt substitutes have also been prepared in accordance with the present invention employing food grade potassium chloride powder.

The particular size potassium chloride may be selected to meet any particular end use application. For example, where "pretzel grade" salt substitutes (i.e., plus 35 (500 μm) mesh US sieve size) are desired, potassium chloride having a particle size greater than 35 mesh (500 μm) may be advantageously employed as the starting material. Where "shaker grade" (i.e., minus 35 to plus 60 mesh, that is to say 250 to 500 μm) is desired for the salt substitute, potassium chloride having a particle size from minus 35 to plus 60 mesh (i.e. 250 to 500 μm) may advantageously be employed as the potassium chloride starting material. Where a "popcorn grade" (i.e., minus 60 mesh, that is to say less than 250 μm) size salt substitute is desired, the potassium chloride starting material may advantageously have a particle size of minus 60 mesh (i.e. less than 250 μm).

The as-produced salt substitutes may be used as is (with or without size classification) or, if desired, may be subjected to size reduction (e.g., crushing) prior to use. Size reduction is advantageously employed where some of the particles or agglomerates formed in the as-produced state are oversize (i.e., larger than desired for a given end use). For example, as produced pretzel grade salt substitute particles may be

3

0 130 821

crushed to form smaller salt substitute particles. When as-produced pretzel grade salt substitute particles were crushed to form shaker grade (i.e., minus 35 to plus 60 mesh, that is to say 250 µm to 500 µm) salt substitute particles, the latter were found to have from about 90 to about 95% of the surface area of the KCl-containing core coated with the maltodextrin. Salt-substitute fines (i.e., particles having a particle size of less than 60 mesh, that is to say less than 250 µm, prepared by crushing larger as-produced particles of the salt-substitute have been found to have from about 60 to about 70% of the surface area of the KCl-containing core coated with the maltodextrin. Surprisingly, fines prepared by such crushing have been found to taste nearly as good as fines prepared directly, i.e., without crushing.

Any suitable maltodextrin may be employed as the maltodextrin component. The maltodextrin employed is preferably a water-soluble maltodextrin having at least a major portion (e.g., slightly more than 50%, preferably about 60% or more) of one or more polysaccharides having a D.P. (i.e., degree of polymerization) of at least 10. More preferably, the maltodextrin employed is additionally a starch hydrolyzate of low sweetness having a low dextrose equivalent value of from about 5 to about 20, more preferably about 5 to about 15 D.E. units, high water solubility with substantial freedom from haze and low hygroscopicity. The most preferred maltodextrin employed herein is that commercially available from Grain Processing Corporation (GPC), Muscatine, Iowa, under the designation Maltrin® M100 maltodextrin. According to the "Typical Analysis" in GPC Bulletin 11011 entitled Maltrin Maltodextrins & Corn Syrup Solids, M100 maltodextrin has a D.E. of about 9—12 D.E. units and a "Carbohydrate Composition, % (db)" as follows: dextrose (1.0), disaccharides (4.0), trisaccharides (6.0) and "tetrasaccharides & higher" (89.0). According to GPC Product Data Sheet 6011 for Maltrin M100 maltodextrin, the M100 has a "Typical Carbohydrate Profile (dry basis) in % as follows: monosaccharides (1%), disaccharides (4%), trisaccharides (6%), tetrasaccharides (5%) and "pentasaccharides & above" (84%).

According to GPC Bulletin 9102 relating to "Carbohydrate Profile" of Maltrin maltodextrins and corn syrup solids, M100 maltodextrin has the following "Typical Carbohydrate Profile":

| Saccharides-by degree of polymerization | Amount % | |
| --- | --- | --- |
| | Average | Range |
| DP1 | 0.5 | 0.3—0.8 |
| DP2 | 2.7 | 2.3—2.9 |
| DP3 | 4.3 | 4.2—5.0 |
| DP4 | 3.7 | 3.3—4.1 |
| DP5 | 3.1 | 2.7—3.4 |
| DP6 | 5.0 | 0.7—6.0 |
| DP7 | 7.1 | 6.5—8.3 |
| DP8 | 4.5 | 4.2—5.3 |
| DP9 | 3.1 | 2.8—3.6 |
| DP10 | 1.6 | 0.6—2.9 |
| Above DP10 | 64.4 | 56.8—68.1 |

The above GPC bulletins and data sheet are incorporated herein by reference.

Maltodextrins suitable for use herein may be prepared, for example, in accordance with the methods disclosed in U.S. Patents 3,560,343; 3,663,369; 3,849,194; and 4,298,400. These patents are incorporated herein by reference.

Cream of tartar suitably included herein is commercially available from McCormick & Co. (Baltimore, Maryland). In general, cream of tartar is preferably included in an amount of about 0.33%.

Advantageously, salt-substitute compositions of the present invention containing potassium chloride, maltodextrin and cream of tartar can be made as "salt-free' (i.e., free of sodium chloride) salt substitutes having highly suitable taste. Alternatively, in embodiments of the invention sodium chloride can be included in the salt-substitute particles (in addition to potassium chloride, maltodextrin and cream of tartar), preferably in the coating mixture. In such embodiments sodium chloride can be included in any effective amount. The amounts of the components in these embodiments may be, for example:

potassium chloride: from about 91 to about 19%,

maltodextrin: from about 1 to about 40%,

4

cream of tartar: from about 0.1 to about 0.9%, and

sodium chloride: up to about 50%,

wherein the percentage amounts are by weight based on the combined weight of said components.

As a general preference, the potassium chloride component is included in such four component embodiments in an amount from about 91 to about 19%, the maltodextrin component is included in an amount from about 10 to about 30%, the cream of tartar component is included in an amount from about 0.1 to about 0.7%, and the sodium chloride component is included in an amount from about 0.1% to about 50% wherein the percentage amounts are by weight based on the combined weight of the four components set forth above.

More preferably, the potassium chloride is included in an amount from about 85 to about 65%, the maltodextrin is included in an amount from about 15 to about 20%, the cream of tartar is included in an amount from about 0.1 to about 0.5%, and the sodium chloride is included in an amount from about 0.1 to about 15%, such percentages being by weight and on the aforesaid basis (i.e., the combined total weight of these four components being 100% by weight).

The salt substitutes of the present invention may be prepared, for example, by spraying an aqueous solution containing maltodextrin (and, optionally, sodium chloride and/or cream of tartar) onto an agitated bed of crystalline potassium chloride. The aqueous solution may contain any suitable concentrations of maltodextrin (and of cream of tartar and/or of sodium chloride where included) and may be employed in any suitable amount relative to the amount of potassium chloride being coated such that the dextrose equivalent of the resulting coated composition is not more than 10 D.E. units. As a general preference, the solution is a relatively dilute mixture (containing the maltodextrin in an amount of, for example, from about 25% to about 37%, based on the combined weight of the maltodextrin and water).

Practice of the present invention is illustrated by the following nonlimiting examples. All parts and percentages given throughout this disclosure including the examples and claims appended hereto, are by weight unless otherwise indicated.

Unless otherwise indicated, the taste panel results set forth in the examples resulted from the following taste test procedure. Each panelist touched his tongue sequentially to each taste sample, which was supported on a clean paper napkin, made his taste evaluation, and rinsed his mouth with water prior to so tasting each sample. Each panel included at least three panelists. The evaluation or rating system is set forth herein below.

Example 1

Maltodextrin M100 (Grain Processing Corporation) 20 parts, were added with stirring to about 60 parts of water to form an aqueous coating mixture or solution containing about 25% maltodextrin M100, balance water. Stirring was continued until a substantially uniform solution having substantial freedom from haze was formed.

To a Hobart Model No. N-50 blender equipped with an electrical heater, an insulation jacket and an agitator was added about 80 parts of potassium chloride (Code 6307—granular, Mallinckrodt, Inc.). The resulting particulate bed of potassium chloride granules or crystals was agitated and heated to 120°C. and thereafter the aqueous solution containing maltodextrin was slowly sprayed onto the bed while continuing agitation thereof. Spraying was effected at a rate such that the temperature of the agitated KCl-containing bed was maintained at approximately 120°C. throughout the spraying condition to effect continual removal of the resulting water vapor.

After all the solution had been sprayed onto the agitated bed, agitation was continued for about 15 minutes to effect removal of additional water vapor. Thereafter, the resulting substantially dry, free-flowing salt substitute containing potassium chloride particles coated with the maltodextrin was recovered and separated into three size classes using 60 mesh (250 µm) and 35 mesh (500 µm) screens (U.S. Standard Sieves). A sample of each size class of the recovered salt substitute was analyzed by photo-microscopy using 7—100X magnification and phase contrast illumination.

Visual inspection of the photomicrographs showed the following approximate average surface area coating:

plus 35 mesh ("pretzel grade"), i.e. larger than 500 µm, substantially 100%,

minus 35 to plus 60 mesh ("shaker grade"), i.e. 250 to 500 µm, about 90 to about 95%,

minus 60 mesh ("fines" or "popcorn grade"), i.e. smaller than 250 µm, about 80 to about 95%.

Visual observation (without magnification) of particles in each of the above three size classes showed that the salt substitute was substantially identical in appearance to sodium chloride of like size. Moreover, the size classes of each of the above salt substitutes were found to be substantially free-flowing and substantially nonhygroscopic. Samples of the shaker grade composition were subjected to a taste test for evaluation. Samples of comparative materials were included in the test. Results of the test are set forth in Table I. The trade marks as used in the following are acknowledged as such.

**0 130 821**

TABLE I
Taste panel results

| Source of taste sample | Taste characteristics (a) | | | | |
|---|---|---|---|---|---|
| | Saltiness | Bitter-metallic | Cooling | After-taste | Sweetness |
| (I) Invention Example 1 | 1.5 | 1.08 | 0.67 | 0.79 | 1.0 |
| KCl 80% (core) | | | | | |
| MD 20% (coating) | | | | | |
| (II) Comparative materials Sodium chloride (b) | 1 | 0 | 0 | 0.5 | 0 |
| Potassium chloride (c) | 1.33 | 2.33 | 2.5 | 2.33 | 0 |
| Cumberland *Nu Salt* (d) | 1.42 | 2.0 | 1.67 | 1.92 | 1.5 |
| Norcliff T *No Salt* (e) | 1 | 2.5 | 2.5 | 2.5 | 0 |
| L.S. *Salt-Free* (f) | 2.17 | 0.33 | 0.92 | 3.67 | 0.67 |
| Adolph's *Salt-Sub* (g) | 2.0 | 2.92 | 2.5 | 3.0 | 0 |
| Feather. *Salt-Sub* (h) | 1.33 | 1.5 | 2.17 | 1.92 | 0.5 |
| M.S. *Salt-Sub* (i) | 1.58 | 2.17 | 1.83 | 2.56 | 0.17 |
| "KCl Flo-Free Plus" (j) | 1.17 | 3.0 | 1.67 | 2.58 | 1.0 |

(a) Each numerical result for each characteristic is the arithmetic average of each panelist's numerical rating made in accordance with the rating system set forth in Table II.

(b) "Morton Blue Can", Morton Salt Co. (Div. of Morton-Norwick Products, Inc.), Chicago, Illinois.

(c) "6307—Granular", Mallinckrodt, Inc., St. Louis, Missouri.

(d) ("Sweet 'N Low Nu-Salt" Cumberland Packing Corp., Brooklyn, NY) Approximate Analysis: 84% KCl, 15% dextrose, 0.08% "CT" (cream of tartar), 0.7% insoluble matter, 1.5% water. Represented as containing less than 10 mg of sodium per 100 g.

(e) ("No Salt"—Norcliff Thayer, Inc., Tuckahoe, NY) Represented as containing KCl, potassium bitartrate, potassium glutamate, adipic acid, fumaric acid, polyethylene glycol 400, disodium inosinate and less than 10 mg of sodium per 100 g.

(f) ("Lawry's Seasoned Salt-Free")—Lawry's Foods, Inc., Los Angeles, California.) Represented as containing KCl, dextrose, spices (including paprika and turmeric), onion, garlic, tricalcium phosphate, corn starch, disodium inosinate, disodium guanylate, potassium bitartrate, natural flavor and less than 180 mg of sodium and 10,440 mg potassium per 100 g.

(g) ("Adolph's Salt Substitute"—Adolph's Ltd., N. Hollywood, California.) Represented as containing KCl (97.1%), silicon dioxide, tartaric acid and less than 10 mg of sodium per 100 g.

(h) ("Featherweight 'K' Salt Substitute"—Chicago Dietetic Supply, Inc., LaGrange, Illinois.) Represented as containing KCl, glutamic acid, potassium glutamate, tricalcium phosphate and less than 5 mg of sodium and 45 mg of potassium per 100 g.

(i) ("Morton Seasoned Salt Substitute"—Morton Salt Co., Chicago, Illinois.) Represented as containing KCl, spices, sugar, fumaric acid, tricalcium phosphate, monocalcium phosphate and less than 20 mg of sodium per 100 g.

(j) ("Potassium Chloride FCC Flo-Free Plus"—American International Chemical, Inc. Natick, Mass.) Represented as containing KCl (96%), silicon dioxide, mono-ammonium glutamate, malic acid and tri-calcium phosphate.

6

# 0 130 821

TABLE II
Rating system

| Meaning of numerical rating | Related taste characteristic | |
| --- | --- | --- |
| | saltiness | All others |
| 0 | Saltier than salt | None |
| 1 | High salt-like taste | Low |
| 2 | Medium salt-like taste | Medium |
| 3 | Low salt-like taste | High |
| 4 | No salt-like taste | Overwhelming |

The salt substitute composition of Example 1 is a "salt-free" composition, i.e., it is free of sodium chloride.

As shown by the taste panel results in Table I, the salt substitute of the present invention illustrated by Example 1 has been found to closely approach the taste of common salt (sodium chloride) and more closely approach such taste than the other comparative materials set forth therein in at least one taste characteristic. Such other comparative materials set forth in Table I are known or believed to be "salt-free" or at least substantially salt-free.

Example 2

An additional portion of the composition of Example 1 was submitted for taste panel evaluation and comparison with sodium chloride, potassium chloride and various materials containing both sodium chloride and potassium chloride. Results of the evaluation appear in Table III.

TABLE III
Taste panel results

| Source of taste sample | Taste characteristics (a) | | | | |
| --- | --- | --- | --- | --- | --- |
| | Saltiness | Bitter-metallic | Cooling | After-taste | Sweetness |
| (I) Invention Example 1 KCl 80% (core) MD 20% (coating) | 1.5 | 1.33 | 1.33 | 1.50 | 0 |
| (II) Comparative materials Sodium chloride (Table Salt-Iodized) (Morton Salt Co.) | 1 | 0 | 0 | 0 | 0 |
| Potassium chloride ("6307—Granular", Mallinckrodt) | 1 | 3.25 | 3.25 | 3.0 | 0 |
| "Lite Salt" (b) (Morton Salt Co.) | 0.83 | 1.67 | 1.67 | 1.33 | 0 |

Coated KCl-containing compositions (c)

| % KCl (x) | % MD (y) | % NaCl (z) | Saltiness | Bitter-metallic | Cooling | After-taste | Sweetness |
| --- | --- | --- | --- | --- | --- | --- | --- |
| 77 | 20 | 3 | 1.42 | 1.17 | 1.0 | 0.83 | 0 |
| 75 | 20 | 5 | 1.5 | 1.0 | 0.66 | 0.50 | 0 |
| 72 | 20 | 8 | 1.25 | 0.50 | 0.25 | 0.50 | 0 |
| 65 | 20 | 15 | 1.25 | 0.50 | 0.58 | 0.33 | 0 |

7

(a) Each numerical result for each characteristic is the arithmetic average of each panelist's numerical rating made in accordance with the rating system set forth in Table II.

(b) Analysis: 49.5% NaCl, 49.5% KCl, 1% other (including calcium silicate, magnesium carbonate, dextrose and potassium iodide.

(c) Prepared by spraying an aqueous solution containing y parts Maltrin® M100 maltodextrin ("MD"), z parts NaCl and approximately 60 parts water onto an agitated bed of KCl (Code 6307—granular, Mallinckrodt, Inc.), x parts, maintained about 120°C and continuing agitation at such temperature until the resulting coated particles were substantially dry.

As shown by the taste panel results in Table III, the salt substitute of Example 1 has again been found to closely approach the taste of common salt and more closely approach such taste than the comparative materials set forth therein other than the comparative "Coated KCl-Containing Compositions", all of which contain NaCl in the coatings. Surprisingly, relative to the comparative coated compositions, the "salt-free" salt substitute of Example 1 was found comparable in saltiness rating.

It is recognized that what is considered the best salt-substitute composition embodying this invention may depend on the desires of a given end user.

In general, however, the salt substitute set forth in Example 1 above is contemplated to be the best sodium chloride free embodiment from the standpoints of commercial attractiveness and overall taste appeal.

Example 3

Maltodextrin M100 (Grain Processing Corporation) 20 parts, and USP sodium chloride, 8 parts, were added with stirring to 52 parts of water to form an aqueous coating mixture or solution containing 25% maltodextrin M100 and 10% sodium chloride, balance water. Stirring was continued until a substantially uniform solution having substantial freedom from haze was formed.

To a Hobart Model No. N-50 blender equipped with an electrical heater, an insulation jacket and an agitator was added 72 parts of potassium chloride (Code 6307—granular, Mallinckrodt, Inc.). The resulting particulate bed of potassium chloride granules or crystals was agitated and heated to 120°C and thereafter the aqueous solution containing maltodextrin and sodium chloride was slowly sprayed onto the bed while continuing agitation thereof. Spraying was effected at a rate such that the temperature of the agitated KCl-containing bed was maintained at approximately 120°C throughout the spraying operation to effect continual removal of the resulting water vapor.

After all the solution had been sprayed onto the agitated bed, agitation was continued for about 15 minutes to effect removal of additional water vapor. Thereafter, the resulting substantially dry, free-flowing salt substitute containing potassium chloride particles coated with the maltodextrin and sodium chloride was recovered and separated into three size classes using 60 mesh (250 μm) and 35 mesh (500 μm) screens (U.S. Standard Sieves). A sample of each size class of the recovered salt substitute was analyzed by photo-microscopy using 100× magnification and phase contrast illumination.

Visual inspection of the photomicrographs showed the following approximate average surface area coating:

plus 35 mesh ("pretzel grade"), i.e. larger than 500 μm, substantially 100%

minus 35 to plus 60 mesh ("shaker grade") i.e. 250 to 500 μm, about 90 to about 95%

minus 60 mesh ("fines" or "popcorn grade"), i.e. smaller than 250 μm, about 80 to about 95%.

Visual observation (without magnification) of particles in each of the above three size classes showed that the salt substitute was substantially identical in appearance to sodium chloride of like size. Moreover, the size classes of each of the above salt substitutes were found to be substantially free-flowing and substantially nonhygroscopic. Samples of the shaker grade composition were subjected to a taste test for evaluation along with samples of shaker grade portions of compositions of this invention described in Examples 4—6 hereinbelow. Samples of comparative materials were included in the test. Results of the test are set forth in Table IV, which appears after Examples 4—6 below.

Examples 4—6

The procedure of Example 3 was repeated in each of these examples except that the amounts of sodium·chloride and potassium chloride were varied over the allowing ranges: 3—15% sodium chloride and 77—65% potassium chloride (20% maltodextrin was employed in each of these three examples as in Example 3).

The approximate amounts of the components of the compositions of Examples 3—6 are set forth below:

|  | Approximate amount of components (%) | | | |
|---|---|---|---|---|
| Components | Ex. 3 | Ex. 4 | Ex. 5 | Ex. 6 |
| Potassium chloride | 72 | 77 | 75 | 65 |
| Maltodextrin | 20 | 20 | 20 | 20 |
| Sodium chloride | 8 | 3 | 5 | 15 |

8

**0 130 821**

The results of visual inspection with respect to appearance relative to the appearance of sodium chloride were substantially the same for Example 4—6 as for Example 3 above. The taste panel's itemized evaluation by taste category for each of the products prepared in Examples 4—6 appear in Table IV below, along with the above indicated taste results for Example 3 and for the comparative materials referenced in Table IV.

TABLE IV
Taste panel results

| Source of taste sample | Taste characteristics (a) | | | | |
|---|---|---|---|---|---|
| | Saltiness | Bitter-metallic | Cooling | After-taste | Sweetness |
| (I) Invention Example 3 (8% NaCl) | 1.25 | 0.50 | 0.25 | 0.50 | 0 |
| Example 4 (3% NaCl) | 1.42 | 1.17 | 1.0 | 0.83 | 0 |
| Example 5 (5% NaCl) | 1.5 | 1.0 | 0.66 | 0.50 | 0 |
| Example 6 (15% NaCl) | 1.25 | 0.50 | 0.58 | 0.33 | 0 |
| (II) Comparative materials Sodium chloride (Table Salt (Iodized) (Morton Salt Co.) | 1 | 0 | 0 | 0 | 0 |
| Potassium chloride ("6307—Granular", Mallinckrodt) | 1 | 3.25 | 3.25 | 3.0 | 0 |
| "Lite Salt" (b) (Morton Salt Co.) | 0.83 | 1.67 | 1.67 | 1.33 | 0 |

(a) Each numerical result for each characteristic is the arithmetic average of each panelist's numerical rating made in accordance with the rating system set forth in Table II.

(b) Anlysis: 49.5% NaCl, 49.5% KCl, 1% other (including calcium silicate, magnesium carbonate, dextrose and potassium iodide).

An additional portion of the composition of Example 6 was submitted for taste panel evaluation and comparison with various materials containing sodium chloride and potassium chloride. Results of the evaluation appear in Table V.

TABLE V
Taste panel results

| Source of taste sample | Taste characteristics (a) | | | | |
|---|---|---|---|---|---|
| | Saltiness | Bitter-metallic | Cooling | After-taste | Sweetness |
| (I) Invention Example 6 (15% NaCl) | 1.25 | 0.63 | 0.63 | 0.63 | 1.0 |
| (II) Comparative materials 20% NaCl+80% KCl (b) | 1.0 | 3.0 | 3.0 | 3.0 | 0 |
| 50% NaCl+50% KCl (b) | 1.13 | 2.75 | 1.75 | 2.25 | 0 |
| "Lite Salt" (c) (Morton Salt Co.) | 1.25 | 2.75 | 1.75 | 3.0 | 0 |

(a) Each numerical result for each characteristic is the arithmetic average of each panelist's numerical rating made in accordance with the rating system set forth in Table II.

(b) 2-component mixtures within numerical range disclosed in Frank et al., U.S. Pat. Nos. 3,514,296 and

9

Re. 27,981, each prepared by thoroughly admixing granular NaCl and granular KCl in the indicated proportions until a homogeneous product was attained.

(c) Analysis: 49.5% NaCl, 49.5% KCl, 1% other (including calcium silicate, magnesium carbonate, dextrose and potassium iodide).

As shown by the taste panel results in Table IV and Table V, the salt substitutes of the present invention, as illustrated by Examples 3—6, have been found to closely approach the taste of common salt and more closely approach such taste than the comparative materials set forth therein.

It is recognized that different end users may desire different levels of sodium chloride, and accordingly the best salt-substitute composition embodying this invention will depend on the desires of a given end user.

In general, however, the salt substitute set forth in Example 5 above is contemplated to be the best embodiment of a salt substitute containing potassium chloride, maltodextrin and sodium chloride from the standpoint of commercial attactiveness, while that set forth in Example 3 above is contemplated to be the best embodiment of such a salt substitute for overall taste appeal.

Example 7

A composition of this invention containing potassium chloride, maltodextrin ("MD") and cream of tartar ("CT") was prepared in this example.

Maltodextrin M100 (Grain Processing Corporation) 20 parts, and cream of tartar (McCormick & Co.), 0.33 parts, were added with stirring to about 60, parts of water to form an aqueous coating mixture or solution containing about 25% maltodextrin M100 and about 0.41% cream of tartar, balance water such % amounts based on the combined weight of MD and water. Stirring was continued until a substantially uniform solution having substantial freedom from haze was formed.

To a Hobart Model No. N-50 blender equipped with an electrical heater, an insulation jacket and an agitator was added 79.67 parts of potassium chloride (Code 6307—granular, Mallinckrodt, Inc.). The resulting particulate bed of potassium chloride granules or crystals was agitated and heated to 120°C and thereafter the aqueous solution containing maltodextrin and cream of tartar was slowly sprayed onto the bed while continuing agitation thereof. Spraying was effected at a rate such that the temperature of the agitated KCl-containing bed was maintained at approximately 120°C. throughout the spraying operation to effect continual removal of the resulting water vapor.

After all the solution had been sprayed onto the agitated bed, agitation was continued for about 15 minutes to effect removal of additional water vapor. Thereafter, the resulting substantially dry, free-flowing salt substitute containing potassium chloride particles coated with the maltodextrin and cream of tartar was recovered and separated into three size classes using 60 mesh (250 μm) and 35 mesh (500 μm) screens (U.S. Standard Sieves). A sample of each size class of the recovered salt substitute was analyzed by photo-microscopy using 7—001 malnification and phase contrast illumination.

Visual inspection of the photomicrographs showed the following approximate average surface area coating:

plus 35 mesh ("pretzel grade"), i.e. larger than 500 μm, substantially 100%

minus 35 to plus 60 mesh ("shaker grade"), i.e. 250 μm to 500 μm, about 90 to about 95%,

minus 60 mesh ("fines" or "popcorn grade"), i.e. smaller than 250μm, about 80 to about 85%.

Visual observation (without magnification) of particles in each of the above three size classes showed that the salt susbtitute was substantially identical in appearance to sodium chloride of like size. Moreover, the size classes of each of the above salt substitutes were found to be substantially free-flowing and substantially nonhygroscopic. Samples of the shaker grade composition were subjected to a taste test for evaluation. Samples of comparative materials were included in the test. Results of the test are set forth in Table VI.

TABLE VI
Taste panel results

Taste characteristics (a)

| Source of taste sample | Saltiness | Bitter-metallic | Cooling | After-taste | Sweetness |
|---|---|---|---|---|---|
| (I) Invention | | | | | |
| Example 7 | 1.67 | 1.17 | 0.42 | 0.63 | 0.83 |
| KCl (79.67% (core) | | | | | |
| MD 20% (coating) | | | | | |
| CT 0.33% (coating) | | | | | |
| (II) Comparative materials | | | | | |
| Sodium chloride (b) | 1 | 0 | 0 | 0.5 | 0 |
| Potassium chloride (c) | 1.33 | 2.33 | 2.5 | 2.33 | 0 |
| Cumberland *Nu Salt* (d) | 1.42 | 2.0 | 1.67 | 1.92 | 1.5 |
| Norcliff T *No Salt* (e) | 1 | 2.5 | 2.5 | 2.5 | 0 |
| L.S. *Salt-Free* (f) | 2.17 | 0.33 | 0.92 | 3.67 | 0.67 |
| Adolph's *Salt-Sub* (g) | 2.0 | 2.92 | 2.5 | 3.0 | 0 |
| Feather. *Salt-Sub* (h) | 1.33 | 1.5 | 2.17 | 1.92 | 0.5 |
| M.S. *Salt-Sub* (i) | 1.58 | 2.17 | 1.83 | 2.56 | 0.17 |
| "KCl Flo-Free Plus" (j) | 1.17 | 3.0 | 1.67 | 2.58 | 1.0 |

For the significance of the annotations (a) to (j) reference should be made to the footnotes to Tables I.

Examples 8 and 9

Compositions of this invention containing potassium chloride, maltodextrin ("MD"), cream of tartar ("CT") and sodium chloride were prepared in these Examples. The preparation procedure of Example 7 was repeated in each of these examples except as follows: In Example 8, sodium chloride (4 parts) was additionally added with the MD and CT to form the coating mixture or solution and the amount of potassium chloride employed was 75.67 parts. In Example 9, sodium chloride (15 parts) was additionally added with the MD and CT and the amount of potassium chloride employed was 64.67 parts. In each of these examples, the amount of water employed in the coating mixture was such that the concentration of MD therein was about 25—30% based on the total weight of MD and water.

The approximate amounts of the components of the compositions of Examples 8 and 9 are set forth below:

Approximate amount of components (%)

| Components | Ex. 8 | Ex. 9 |
|---|---|---|
| Potassium chloride | 76 | 65 |
| Maltodextrin ("MD") | 20 | 20 |
| Cream of Tartar ("CT") | 0.33 | 0.33 |
| Sodium chloride | 4 | 15 |

The results of visual inspection with respect to appearance relative to the appearance of sodium chloride were substantially the same for Examples 8 and 9 as for Example 7 above. Samples of the shaker grade portion of each of the compositions of Example 8 and Example 9 were subjected to a taste test for evaluation. Samples of comparative materials were included in each test. Taste panel itemized evaluations by taste category for Example 8 and Example 9 appear in Table VII and Table VIII, respectively, along with evaluations for the comparative materials.

**0 130 821**

TABLE VII
Taste panel results

| Source of taste sample | Taste characteristics (a) | | | | |
|---|---|---|---|---|---|
| | Saltiness | Bitter-metallic | Cooling | After-taste | Sweetness |
| (I) Invention<br>Example 8<br>KCl 75.67% (core)<br>MD 20% (coating)<br>CT 0.33% (coating)<br>NaCl 4% (coating) | 1.33 | 1.17 | 0.75 | 1.17 | 0.67 |
| (II) Comparative materials<br>"Nu Salt" (b)<br>(Cumberland<br>Packing Corp.) | 1.08 | 2.17 | 2.0 | 1.67 | 1.0 |
| Coated KCl-containing<br>composition (c)<br>75% KCl (core)<br>20% MD (coating)<br>5% NaCl (coating) | 1.58 | 1.67 | 0.92 | 1.67 | 0.5 |
| Coated KCl-containing<br>composition (d)<br>72% KCl (core)<br>20% MD (coating)<br>8% NaCl (coating) | 1.25 | 0.75 | 0.58 | 1.08 | 1.33 |
| Sodium chloride<br>(Morton) | 1.0 | 0 | 0 | 0.67 | 0 |

(a) Each numerical result for each characteristic is the arithmetic average of each panelist's numerical rating made in accordance with the rating system set forth in Table II.

(b) Approximate analysis: 84% KCl, 15% dextrose, 0.08 "CT" (Cream of Tartar), 0.7% insoluble matter, 1.5% water.

(c) Prepared by spraying an aqueous solution containing 20 parts Maltrin® M100 maltodextrin ("MD"), 5 parts NaCl and approximately 60 parts water onto an agitated bed of KCl (Code 6307—granular, Mallinckrodt, Inc.), 75 parts, maintained about 120°C. and continuing agitation at such temperature until the resulting coated particles were substantially dry.

(d) Prepared as in note (c), except with different amounts of KCl and NaCl.

# 0 130 821

### TABLE VIII
### Taste panel results

| | Taste characteristics (a) | | | | |
| Source of taste sample | Saltiness | Bitter-metallic | Cooling | After-taste | Sweetness |
|---|---|---|---|---|---|
| (I) Invention | | | | | |
| Example 9 | 1.13 | 0.75 | 0.5 | 0.5 | 1.38 |
| KCl 64.67% (core) | | | | | |
| MD 20% (coating) | | | | | |
| CT 0.33% (coating) | | | | | |
| NaCl 15% (coating) | | | | | |
| (II) Comparative materials | | | | | |
| 20% NaCl+80% KCl (b) | 1.0 | 3.0 | 3.0 | 3.0 | 0 |
| 50% NaCl+50% KCl (b) | 1.13 | 2.75 | 1.75 | 2.25 | 0 |
| "Lite Salt" (c) (Morton Salt Co.) | 1.25 | 2.75 | 1.75 | 3.0 | 0 |
| Coated KCl-containing composition (d) | 1.25 | 0.63 | 0.63 | 0.63 | 1.0 |
| 65% KCl (core) | | | | | |
| 20% MD (coating) | | | | | |
| 15% NaCl (coating) | | | | | |
| Sodium chloride ("7851—Granular", Mallinckrodt, Inc.) | 1.0 | 0 | 0 | 0 | 0 |

(a) Each numerical result for each characteristic is the arithmetic average of each panelist's numerical rating made in accordance with the rating system set forth in Table II.

(b) 2-component mixtures within numerical range disclosed in Frank et al., U.S. Pat. Nos. 3,514,296 and Re. 27,981, each prepared by thoroughly admixing granular NaCl and granular KCl in the indicated proportions until a homogeneous product was attained.

(c) Analysis: 49.5% NaCl, 49.5% KCl, 1% other (including calcium silicate, magnesium carbonate, dextrose and potassium iodide.

(d) Prepared by spraying an aqueous solution containing 20 parts Maltrin® M100 maltodextrin ("MD"), 15 parts NaCl and approximately 60 parts water onto an agitated bed of KCl (Code 6307—granular, Mallinckrodt, Inc.), 65 parts, maintained about 120°C. and continuing agitation at such temperature until the resulting coated particles were substantially dry.

As shown by the taste panel results in Table VI, Table VII and Table VIII, the salt substitutes of the present invention, as illustrated by Examples 7—9, have been found to closely approach the taste of common salt (sodium chloride) and more closely approach such taste than the other comparative materials set forth therein in at least one taste characteristic.

It is recognized that different end users may desire different levels of sodium chloride, and accordingly the best salt-substitute composition embodying this invention will depend on the desires of a given end user.

In general, however, regarding "salt-free" compositions containing potassium chloride, maltodextrin, and cream of tartar, the salt substitute set forth in Example 7 is contemplated to be the best embodiment of this invention; regarding NaCl-containing compositions, the four component salt substitute set forth in Example 8 above is contemplated to be the best embodiment from the standpoint of commercial attractiveness, while the composition set forth below is contemplated to be the best embodiment of a four component composition for overall taste appeal:

| | Approximate amount |
|---|---|
| Core | |
| potassium chloride | 71.67% |
| Coating mixture | |
| maltodextrin M100 | 20% |
| cream of tartar | 0.33% |
| sodium chloride | 8% |

13

# 0 130 821

It is contemplated that carrying out production of large-scale (e.g., commercial-size) quantities of the salt substitute of the present invention can best be effected using fluidized-bed fluidization for agitation of the potassium chloride particles, with a flow of warm air as the medium for fluidizing the bed, the air flow serving to remove the water vapor formed in the bed.

**Claims for the Contracting States: BE, CH, DE, FR, GB, IT, LI, LU, NL, SE**

1. A salt substitute composition which comprises coated particles, each particle comprising:
(a) a core comprising potassium chloride, and
(b) a coating on said core, said coating comprising maltodextrin,
wherein the dextrose equivalent (D.E.) of the combined core and coating is not more than 10 D.E. units.

2. A composition according to claim 1, wherein the coating comprises maltodextrin and is free of sodium chloride, wherein the dextrose equivalent (D.E.) of the combined amount of potassium chloride and maltodextrin is not more than 10 D.E. units and wherein the components are present in the percentage amounts set forth:
potassium chloride: from about 99 to about 60%, and
maltodextrin: from about 1 to about 40%,
wherein the percentage amounts are by weight based on the combined weight of said components.

3. A composition according to claim 2, wherein the components are present in the percentage amounts set forth:
potassium chloride: from about 90 to about 70%, and
maltodextrin: from about 10 to about 30%.

4. A composition according to claim 3, wherein the components are present in the percentage amounts set forth:
potassium chloride: from about 85 to about 80%, and
maltodextrin: from about 15 to about 20%.

5. A composition according to claim 4, wherein the components are present in the percentage amounts set forth:
potassium chloride: about 80%, and
maltodextrin: about 20%.

6. A composition according to claim 1, wherein the coating comprises a mixture containing:
(i) maltodextrin having a dextrose equivalent of from about 5 to about 20 D.E. units, and
(ii) sodium chloride,
wherein the dextrose equivalent (D.E.) of the combined amount of potassium chloride, maltodextrin and sodium chloride is not more than 10 D.E. units, and wherein the ingredients are present in the percentage amounts set forth:
potassium chloride: from about 90 to about 17%,
maltodextrin: from about 7 to about 30%, and
sodium chloride: from about 0.1 to about 75%,
wherein the percentage amounts are by weight based on the combined weight of said ingredients.

7. A composition according to claim 6, wherein the ingredients are present in the percentage amounts set forth:
potassium chloride: from about 85 to about 65%,
maltodextrin: from about 15 to about 20%, and
sodium chloride: from about 0.2 to about 15%.

8. A composition according to claim 6, wherein the amount of potassium chloride is about 75%, the amount of maltodextrin is about 20%, and the amount of sodium chloride is about 5%.

9. A composition according to claim 6, wherein the amount of potassium chloride is about 72%, the amount of maltodextrin is about 20% and the amount of sodium chloride is about 8%.

10. A composition according to claim 1, wherein the coating comprises a mixture containing:
(i) maltodextrin, and
(ii) cream of tartar,
wherein the dextrose equivalent (D.E.) of the combined amount of potassium chloride, maltodextrin and cream of tartar is not more than 10 D.E. units, and wherein the components are present in the percentage amounts set forth:
potassium chloride: from about 91 to about 59%,
maltodextrin: from about 1 to about 40%, and
cream of tartar: from about 0.1 to about 0.9%,
wherein the percentage amounts are by weight based on the combined weight of said components.

11. A composition according to claim 10, wherein the components are present in the percentage amounts set forth:
potassium chloride: from about 40 to about 69%,
maltodextrin: from about 10 to about 30%, and
cream of tartar: from about 0.1 to about 0.7%.

14

**0 130 821**

12. A composition according to claim 10, wherein the amount of potassium chloride is about 79.67%, the amount of maltodextrin is about 20%, and the amount of cream of tartar is about 0.33%.

13. A composition according to any one of claims 1, 2, 10, 11 and 12, wherein the composition is free of sodium chloride.

14. A composition according to any one of claims 10 to 12, wherein said mixture further includes sodium chloride and the dextrose equivalent (D.E.) of the combined amount of potassium chloride, maltodextrin, cream of tartar and sodium chloride is not more than 10 D.E. units.

15. A composition according to claim 14, wherein the components are present in the percentage amounts set forth:

potassium chloride: from about 91 to about 19%, maltodextrin: from about 1 to about 40%, cream of tartar: from about 0.1 to about 0.9%, and

sodium chloride: up to about 50%,

wherein the percentage amounts are by weight based on the combined weight of said components.

16. A composition according to claim 15, wherein the components are present in the percentage amounts set forth:

potassium chloride: from about 91 to about 29%,

maltodextrin: from about 10 to about 30%,

cream of tartar: from about 0.1 to about 0.7%, and

sodium chloride: from about 0.1 to about 50%.

17. A composition according to claim 15, wherein the amount of potassium chloride is about 75.67%, the amount of maltodextrin is about 20%, the amount of cream of tartar is about 0.33% and the amount of sodium chloride is about 4%.

18. A composition according to claim 15, wherein the amount of potassium chloride is about 71.67%, the amount of maltodextrin is about 20%, the amount of cream of tartar is about 0.33% and the amount of sodium chloride is about 8%.

19. A composition according to any one of claims 1 to 18, wherein said maltodextrin is a water-soluble maltodextrin including as at least a major portion thereof one or more polysaccharides having a degree of polymerization (D.P.) of at least 10.

20. A composition according to any one of claims 1 to 19, wherein said maltodextrin is a starch hydrolyzate.

21. A composition according to any one of claims 1 to 20, wherein said maltodextrin has a D.E. in the range from about 5 to about 20 D.E. units.

22. A composition according to claim 21, wherein said maltodextrin has a D.E. in the range from about 5 to 15 D.E. units.

23. A composition according to claim 22, wherein said maltodextrin has a D.E. in the range from about 9 to about 12 D.E. units.

24. A composition according to any one of claims 1 to 23, wherein said maltodextrin has the following saccharide content as determined by high performance liquid chromatography:

| Saccharides—by degree of polymerization | Amount | |
| --- | --- | --- |
| | From about (%) | To about (%) |
| DP1 | 0.3 | 0.8 |
| DP2 | 2.3 | 2.9 |
| DP3 | 4.2 | 5.0 |
| DP4 | 3.3 | 4.1 |
| DP5 | 2.7 | 3.4 |
| DP6 | 0.7 | 6.0 |
| DP7 | 6.5 | 8.3 |
| DP8 | 4.2 | 5.3 |
| DP9 | 2.8 | 3.6 |
| DP10 | 0.6 | 2.9 |
| DP (higher than 10) | 57 | 68 |

15

# 0 130 821

25. A composition according to claim 24, wherein said saccharide content is as follows:

| Saccharides—by degree of polymerization | Amount (%) |
| --- | --- |
| DP1 | about 0.5 |
| DP2 | about 2.7 |
| DP3 | about 4.3 |
| DP4 | about 3.7 |
| DP5 | about 3.1 |
| DP6 | about 5.0 |
| DP7 | about 7.1 |
| DP8 | about 4.5 |
| DP9 | about 3.1 |
| DP10 | about 1.6 |
| DP (higher than 10) | about 64 |

26. A composition according to any one of claims 1 to 25 wherein at least 60% of the surface area of said core is coated with said coating.

27. A composition according to claim 26, wherein at least 80% of the surface area of said core is coated with said coating.

28. A process for preparing a salt-substitute composition according to claim 1, said process comprising the steps:

(A) providing a bed of particles comprising crystalline potassium chloride;

(B) agitating said bed and heating said bed to a temperature of from about 120° to about 140°C;

(C) spraying an aqueous solution containing maltodextrin and, optionally sodium chloride, cream of tartar, or a mixture thereof, onto said bed while maintaining said bed under agitation and at said temperature;

(D) removing from said bed water vapor formed therein during said spraying step; and

(E) recovering a coated-particle salt-substitute composition, each particle comprising:

(1) a core comprising potassium chloride; and

(2) a coating on said core, said coating comprising maltodextrin and, optionally, sodium chloride, cream of tartar, or a mixture thereof.

**Claims for the Contracting State: AT**

1. A process for the manufacture of a salt substitute composition which is characterised in that it comprises depositing on

a core comprising potassium chloride,

a coating comprising maltodextrin so as to form coated particles,

wherein the dextrose equivalent (D.E.) of the combined core and coating is not more than 10 D.E. units.

2. A process according to claim 1, characterised in that the coating deposited comprises maltodextrin and is free of sodium chloride, that the dextrose equivalent (D.E.) of the combined amount of potassium chloride and maltodextrin is not more than 10 D.E. units and that the components are used in the percentage amounts set forth:

potassium chloride: from about 99 to about 60%, and

maltodextrin: from about 1 to about 40%,

wherein the percentage amounts are by weight based on the combined weight of said components.

3. A process according to claim 2, characterised in that the components are used in the percentage amounts set forth:

potassium chloride: from about 90 to about 70%, and

maltodextrin: from about 10 to about 30%.

4. A process according to claim 3, characterised in that the components are used in the percentage amounts set forth:

potassium chloride: from about 85 to about 80%, and

maltodextrin: from about 15 to about 20%.

16

# 0 130 821

5. A process according to claim 4, characterised in that the components are used in the percentage amounts set forth:

potassium chloride: about 80%, and

maltodextrin: about 20%.

6. A process according to claim 1, characterised in that the coating deposited comprises a mixture containing:

(i) maltodextrin having a dextrose equivalent of from about 5 to about 20 D.E. units, and

(ii) sodium chloride,

that the dextrose equivalent (D.E.) of the combined amount of potassium chloride, maltodextrin and sodium chloride is not more than 10 D.E. units, and that the ingredients are used in the percentage amounts set forth:

potassium chloride: from about 90 to about 17%,

maltodextrin: from about 7 to about 30%, and

sodium chloride: from about 0.1 to about 75%,

wherein the percentage amounts are by weight based on the combined weight of said ingredients.

7. A process according to claim 6, characterised in that the ingredients are used in the percentage amounts set forth:

potassium chloride: from about 85 to about 65%,

maltodextrin: from about 15 to about 20%, and

sodium chloride: from about 0.2 to about 15%.

8. A process according to claim 6, characterised in that the amount of potassium chloride used is about 75%, the amount of maltodextrin used is about 20%, and the amount of sodium chloride used is about 5%.

9. A process according to claim 6, characterised in that the amount of potassium chloride used is about 72%, the amount of maltodextrin used is about 20% and the amount of sodium chloride used is about 8%.

10. A process according to claim 1, characterised in that the coating deposited comprises a mixture containing:

(i) maltodextrin, and

(ii) cream of tartar,

that the dextrose equivalent (D.E.) of the combined amount of potassium chloride, maltodextrin and cream of tartar is not more than 10 D.E. units, and that the components are used in the percentage amounts set forth:

potassium chloride: from about 91 to about 59%,

maltodextrin: from about 1 to about 40%, and

cream of tartar: from about 0.1 to about 0.9%,

wherein the percentage amounts are by weight based on the combined weight of said components.

11. A process according to claim 10, characterised in that the components are used in the percentage amounts set forth:

potassium chloride: from about 40 to about 69%,

maltodextrin: from about 10 to about 30%, and

cream of tartar: from about 0.1 to about 0.7%.

12. A process according to claim 10, characterised in that the amount of potassium chloride used is about 79.6%, the amount of maltodextrin used is about 20%, and the amount of cream of tartar used is about 0.33%.

13. A process according to any one of claims 1, 2, 10, 11 and 12, characterised in that the core and the coating deposited are each free of sodium chloride.

14. A process according to any one of claims 10 to 12, characterised in that the coating deposited further includes sodium chloride and that the dextrose equivalent (D.E.) of the combined amount of potassium chloride, maltodextrin, cream of tartar and sodium chloride is not more than 10 D.E. units.

15. A process according to claim 14, characterised in that wherein the components are used in the percentage amounts set forth:

potassium chloride: from about 91 to about 19%,

maltodextrin: from about 1 to about 40%,

cream of tartar: from about 0.1 to about 0.9%, and

sodium chloride: up to about 50%,

wherein the percentage amounts are by weight based on the combined weight of said components.

16. A process according to claim 15, characterised in that wherein the components are used in the percentage amounts set forth:

potassium chloride: from about 91 to about 29%,

maltodextrin: from about 10 to about 30%,

cream of tartar: from about 0.1 to about 0.7, and

sodium chloride: from about 0.1 to about 50%.

17. A process according to claim 15, characterised in that wherein the amount of potassium chloride used is about 75.67%, the amount of maltodextrin used is about 20%, the amount of cream of tartar used is about 0.33% and the amount of sodium chloride used is about 4%.

18. A process according to claim 15, characterised in that wherein the amount of potassium chloride

17

used is about 71.67%, the amount of maltodextrin used is about 20%, the amount of cream of tartar used is about 0.33% and the amount of sodium chloride used is about 8%.

19. A process according to any one of claims 1 to 18, characterised in that said maltodextrin is a water-soluble maltodextrin including as at least a major portion thereof one or more polysaccharides having a degree of polymerization (D.P.) of at least 10.

20. A process according to any one of claims 1 to 19, characterised in that said maltodextrin is a starch hydrolyzate.

21. A process according to any one of claims 1 to 20, characterized in that said maltodextrin has a D.E. in the range from about 5 to about 20 D.E. units.

22. A process according to claim 21, characterised in that said maltodextrin has a D.E. in the range from about 5 to 15 D.E. units.

23. A process according to claim 22, characterised in that said maltodextrin has a D.E. in the range from about 9 to about 12 D.E. units.

24. A process according to any one of claims 1 to 23, characterised in that said maltodextrin has the following saccharide content as determined by high performance liquid chromatography:

| Saccharides—by degree of polymerization | Amount | |
|---|---|---|
| | From about (%) | To about (%) |
| DP1 | 0.3 | 0.8 |
| DP2 | 2.3 | 2.9 |
| DP3 | 4.2 | 5.0 |
| DP4 | 3.3 | 4.1 |
| DP5 | 2.7 | 3.4 |
| DP6 | 0.7 | 6.0 |
| DP7 | 6.5 | 8.3 |
| DP8 | 4.2 | 5.3 |
| DP9 | 2.8 | 3.6 |
| DP10 | 0.6 | 2.9 |
| DP (higher than 10) | 57 | 68 |

25. A process according to claim 24, characterised in that said saccharide content is as follows:

**0 130 821**

| Saccharides—by degree of polymerization | Amount (%) |
|---|---|
| DP1 | about 0.5 |
| DP2 | about 2.7 |
| DP3 | about 4.3 |
| DP4 | about 3.7 |
| DP5 | about 3.1 |
| DP6 | about 5.0 |
| DP7 | about 7.1 |
| DP8 | about 4.5 |
| DP9 | about 3.1 |
| DP10 | about 1.6 |
| DP (higher than 10) | about 64 |

26. A process according to any one of claims 1 to 25, characterised in that the coating conditions are selected so that at least 60% of the surface area of said core of said coated particles is coated with said coating.

27. A process according to claim 26, characterised in that the coating conditions are selected so that at least 80% of the surface area of said core of said coated particles is coated with said coating.

28. A process according to any one of claims 1 to 27, characterised in that it comprises the steps:
(A) providing a bed of particles comprising crystalline potassium chloride;
(B) agitating said bed and heating said bed to a temperature of from about 120° to about 140°C;
(C) spraying an aqueous solution containing maltodextrin and, optionally sodium chloride, cream of tartar, or a mixture thereof, onto said bed while maintaining said bed uder agitation and at said temperature;
(D) removing from said bed water vapor formed therein during said spraying step; and
(E) recovering a coated-particle salt-substitute composition, each particle comprising:
(1) a core comprising potassium chloride, and
(2) a coating on said core, said coating comprising maltodextrin and, optionally, sodium chloride, cream of tartar, or a mixture thereof.

**Patentansprüche für die Vertragsstaaten: BE, CH, DE, FR, GB, IT, LI, LU, NL, SE**

1. Salzersatzpräparat, das beschichtete Teilchen aufweist, von denen jedes Teilchen
(a) einen Kaliumchlorid enthaltenden Kern und
(b) eine Maltodextrin enthaltende Beschichtung auf dem Kern
aufweist, wobei das Dextrose-Äquivalent (D.E.) der Kombination aus Kern und Beschichtung nicht mehr als 10 D.E.-Einheiten beträgt.

2. Präparat nach Anspruch 1, bei dem die Beschichtung Maltodextrin enthält und frei von Natriumchlorid ist, wobei das Dextrose-Äquivalent (D.E.) der Gesamtmenge aus Kaliumchlorid und Maltodextrin nicht mehr als 10 D.E.-Einheiten beträgt und die Bestandteile in den angegebenen Prozentmengen vorliegen:
Kaliumchlorid: von etwa 99 bis etwa 60% und
Maltodextrin: von etwa 1 bis etwa 40%,
wobei die Prozentmengen Gewichtsprozente, bezogen auf das Gesamtgewicht der Komponenten sind.

3. Präparat nach Anspruch 2, bei dem die Komponenten in den angegebenen Prozentmengen vorliegen:
Kaliumchlorid: von etwa 90 bis etwa 70% und
Maltodextrin: von etwa 10 bis etwa 30%.

4. Präparat nach Anspruch 3, bei dem die Bestandteile in den angegebenen Prozentmengen vorliegen:
Kaliumchlorid: von etwa 85 bis etwa 80% und
Maltodextrin: von etwa 15 bis etwa 20%.

5. Präparat nach Anspruch 4, bei dem die Komponenten in den angegebenen Prozentmengen vorliegen:

Kaliumchlorid: etwa 80% und

Maltodextrin: etwa 20%.

6. Präparat nach Anspruch 1, bei dem die Beschichtung ein Gemisch ist, das

(i) Maltodextrin mit einem Dextrose-Äquivalent von etwa 5 bis etwa 20 D.E.-Einheiten und

(ii) Natriumchlorid,

enthält, wobei das Dextrose-Äquivalent (D.E.) der Gesamtmenge aus Kaliumchlorid, Maltodextrin und Natriumchlorid nicht mehr als 10 D.E.-Einheiten beträgt und die Bestandteile in den angegebenen Prozentmengen vorliegen:

Kaliumchlorid: von etwa 90 bis etwa 70%,

Maltodextrin: von etwa 7 bis etwa 30% und

Natriumchlorid: von etwa 0,1 bis etwa 70%,

wobei die Prozentmengen Gewichtsprozente, bezogen auf das Gesamtgewicht der genannten Bestandteile sind.

7. Präparat nach Anspruch 6, bei dem die Bestandteile in den angegebenen Prozentmengen vorliegen:

Kaliumchlorid: von etwa 85 bis etwa 65%,

Maltodextrin: von etwa 15 bis etwa 20% und

Natriumchlorid: von etwa 0,2 bis etwa 15%.

8. Präparat nach Anspruch 6, bei dem die Menge Kaliumchlorid etwa 75%, die Menge Maltodextrin etwa 20% und die Menge Natriumchlorid etwa 5% beträgt.

9. Präparat nach Anspruch 6, bei dem die Menge Kaliumchlorid etwa 72%, die Menge Maltodextrin etwa 20% und die Menge Natriumchlorid etwa 8% beträgt.

10. Präparat nach Anspruch 1, bei dem die Beschichtung ein Gemisch ist, das

(i) Maltodextrin und

(ii) Kaliumbitartrat

enthält, wobei das Dextrose-Äquivalent (D.E.) der Gesamtmenge aus Kaliumchlorid, Maltodextrin und Kaliumbitartrat nicht mehr als 10 D.E.-Einheiten beträgt und die Bestandteile in den angegebenen Prozentmengen vorliegen:

Kaliumchlorid: von etwa 91 bis etwa 59%,

Maltodextrin: von etwa 1 bis etwa 40% und

Kaliumbitartrat: von etwa 0,1 bis etwa 0,9%,

wobei die Prozentmengen Gewichtsprozente, bezogen auf das Gesamtgewicht der genannten Komponenten sind.

11. Präparat nach Anspruch 10, bei dem die Komponenten in den angegebenen Prozentmengen vorliegen:

Kaliumchlorid: von etwa 40 bis etwa 69%,

Maltodextrin: von etwa 10 bis etwa 30% und

Kaliumbitartrat: von etwa 0,1 bis etwa 0,7%.

12. Präparat nach Anspruch 10, bei dem die Menge des Kaliumchlorids etwa 79,67%, die Menge des Maltodextrins etwa 20% und die Menge des Kaliumbitartrats etwa 0,33% beträgt.

13. Präparat nach einem der Ansprüche 1, 2, 10, 11 und 12, das frei von Natriumchlorid ist.

14. Präparat nach einem der Ansprüche 10 bis 12, bei dem das Gemisch ferner Natriumchlorid enthält und das Dextrose-Äquivalent (D.E.) der Gesamtmenge aus Kaliumchlorid, Maltodextrin, Kaliumbitartrat und Natriumchlorid nicht mehr als 10 D.E.-Einheiten beträgt.

15. Präparat nach Anspruch 14, bei dem die Komponenten in den angegebenen Prozentmengen vorliegen:

Kaliumchlorid: von etwa 91 bis etwa 19%,

Maltodextrin: von etwa 1 bis etwa 40%,

Kaliumbitartrat: von etwa 0,1 bis etwa 0,9% und

Natriumchlorid: bis zu etwa 50%,

wobei die Prozentmengen Gewichtsprozente, bezogen auf das Gesamtgewicht der genannten Komponenten sind.

16. Präparat nach Anspruch 15, bei dem die Bestandteile in den angegebenen Prozentmengen vorliegen:

Kaliumchlorid: von etwa 91 bis etwa 29%,

Maltodextrin: von etwa 10 bis etwa 30%,

Kaliumbitartrat: von etwa 0,1 bis etwa 0,7% und

Natriumchlorid: von etwa 0,1 bis etwa 50%.

17. Präparat nach Anspruch 15, bei dem die Menge des Kaliumchlorids etwa 75,67%, die Menge des Maltodextrins etwa 20%, die Menge des Kaliumbitartrats etwa 0,33% und die Menge des Natriumchlorids etwa 4% beträgt.

18. Präparat nach Anspruch 15, bei dem die Menge des Kaliumchlorids etwa 71,67%, die Menge des Maltodextrins etwa 20%, die Menge des Kaliumbitartrats etwa 0,33% und die Menge des Natriumchlorids etwa 8% beträgt.

19. Präparat nach einem der Ansprüche 1 bis 18, bei dem das Maltodextrin ein wasserlösliches

## 0 130 821

Maltodextrin ist, das als wenigstens seinen größeren Teil ein oder mehrere Polysaccharide mit einem Polymerisationsgrad (D.P.) von wenigstens 10 enthält.

20. Präparat nach einem der Ansprüche 1 bis 19, bei dem das Maltodextrin ein Stärkehydrolysat ist.

21. Präparat nach einem der Ansprüche 1 bis 20, bei dem das Maltodextrin ein Dextrose-Äquivalent in dem Bereich von etwa 5 bis etwa 20 D.E.-Einheiten hat.

22. Präparat nach Anspruch 21, bei dem das Maltodextrin ein Dextrose-Äquivalent in dem Bereich von etwa 5 bis 15 D.E.-Einheiten hat.

23. Präparat nach Anspruch 22, bei dem das Maltodextrin ein Dextrose-Äquivalent in dem Bereich von etwa 9 bis etwa 12 D.E.-Einheiten hat.

24. Präparat nach einem der Ansprüche 1 bis 23, bei dem das Maltodextrin nach Bestimmung durch Hochleistungsflüssigkeitschromatographie den folgenden Saccharidgehalt hat:

| Saccharide—nach Polymerisationsgrad | Menge | |
|---|---|---|
| | von etwa (%) | bis etwa (%) |
| DP1 | 0,3 | 0,8 |
| DP2 | 2,3 | 2,9 |
| DP3 | 4,2 | 5,0 |
| DP4 | 3,3 | 4,1 |
| DP5 | 2,7 | 3,4 |
| DP6 | 0,7 | 6,0 |
| DP7 | 6,5 | 8,3 |
| DP8 | 4,2 | 5,3 |
| DP9 | 2,8 | 3,6 |
| DP10 | 0,6 | 2,0 |
| DP (höher als 10) | 57 | 68 |

25. Präparat nach Anspruch 24, bei dem der Saccharidgehalt wie folgt ist:

| Saccharide—nach Polymerisationsgrad | Menge (%) |
|---|---|
| DP1 | etwa 0,5 |
| DP2 | etwa 2,7 |
| DP3 | etwa 4,3 |
| DP4 | etwa 3,7 |
| DP5 | etwa 3,1 |
| DP6 | etwa 5,0 |
| DP7 | etwa 7,1 |
| DP8 | etwa 4,5 |
| DP9 | etwa 3,1 |
| DP10 | etwa 1,6 |
| DP (höher als 10) | etwa 64 |

21

26. Präparat nach einem der Ansprüche 1 bis 25, bei dem wenigstens 60% der Oberfläche des Kerns mit der Beschichtung überzogen sind.

27. Präparat nach Anspruch 26, bei dem wenigstens 80% der Oberfläche des Kerns mit der Beschichtung überzogen sind.

28. Verfahren zur Herstellung eines Salzersatz-Präparats nach Anspruch 1 mit den Stufen:

(A) Schaffung eines Bettes aus Teilchen, die kristallines Kaliumchlorid enthalten,

(B) Rührung des Bettes und Erwärmung des Bettes auf eine Temperatur von etwa 120 bis etwa 140°C,

(C) Aufsprühung einer wässrigen Lösung, die Maltodextrin und wahlweise Natriumchlorid, Kaliumbitartrat oder ein Gemisch daraus enthält, auf das Bett, während dieses unter Rührung auf der genannten Temperatur gehalten wird,

(D) Entfernung von während der Ausprühungsstufe gebildetem Wasserdampf von dem Bett und

(E) Gewinnung eines Salzersatz-Präparats mit beschichteten Teilchen aus

(1) einem Kaliumchlorid enthaltenden Kern und

(2) einer Beschichtung auf dem Kern,

die Maltodextrin und wahlweise Natriumchlorid, Kaliumbitartrat oder ein Gemisch daraus enthält.

**Patentansprüche für den Vertragsstaat: AT**

1. Verfahren zur Herstellung eines Salzersatz-Präparats dadurch gekennzeichnet, daß man auf einem Kaliumchlorid enthaltenden Kern,

eine Maltodextrin enthaltenden Beschichtung unter Bildung beschichteter Teilchen,

abscheidet, wobei das Dextrose-Äquivalent (D.E.) der Kombination aus Kern und Beschichtung nicht mehr als 10 D.E.-Einheiten beträgt.

2. Verfahren nach Anspruch 1, dadurch gekennzeichnet, daß die abgeschiedene Beschichtung Maltodextrin enthält und frei von Natriumchlorid ist, das Dextrose-Äquivalent (D.E.) der Gesamtmenge aus Kaliumchlorid und Maltodextrin nicht mehr als 10 D.E.-Einheiten beträgt und die Bestandteile in den nachfolgend angegebenen Prozentmengen eingesetzt werden:

Kaliumchlorid: von etwa 99 bis etwa 60% und

Maltodextrin: von etwa 1 bis etwa 40%,

wobei die Prozentmengen Gewichtsprozente, bezogen auf das Gesamtgewicht der Komponenten sind.

3. Verfahren nach Anspruch 2, dadurch gekennzeichnet, daß die Bestandteile in den angegebenen Prozentmengen eingesetzt werden:

Kaliumchlorid: von etwa 90 bis etwa 70% und

Maltodextrin: von etwa 10 bis etwa 30%.

4. Verfahren nach Anspruch 3, dadurch gekennzeichnet, daß die Bestandteile in den angegebenen Prozentmengen eingesetzt werden:

Kaliumchlorid: von etwa 85 bis etwa 80% und

Maltodextrin: von etwa 15 bis etwa 20%.

5. Verfahren nach Anspruch 4, dadurch gekennzeichnet, daß die Komponenten in den angegebenen Prozentmengen eingesetzt werden:

Kaliumchlorid: etwa 80% und

Maltodextrin: etwa 20%.

6. Verfahren nach Anspruch 1, dadurch gekennzeichnet, daß die abgeschiedene Beschichtung ein

(i) Maltodextrin mit einem Dextrose-Äquivalent von etwa 5 bis etwa 20 D.E.-Einheiten und

(ii) Natriumchlorid

enthaltenden Gemisch aufweist, das Dextrose-Äquivalent (D.E.) der Gesamtmenge aus Kaliumchlorid, Maltodextrin und Natriumchlorid mehr als 10 D.E.-Einheiten beträgt und die Bestandteile in den angegebenen Prozentsätzen eingesetzt werden:

Kaliumchlorid: von etwa 90 bis etwa 17%, Maltodextrin: von etwa 7 bis etwa 30% und

Natriumchlorid: von etwa 0,1 bis etwa 75%,

wobei die Prozentmengen Gewichtsprozente, bezogen auf das Gesamtgewicht der genannten Bestandteile sind.

7. Verfahren nach Anspruch 6, dadurch gekennzeichnet, daß die Bestandteile in den angegebenen Prozentmengen eingesetzt werden:

Kaliumchlorid: von etwa 85 bis etwa 65%,

Maltodextrin: von etwa 15 bis etwa 20% und

Natriumchlorid: von etwa 0,2 bis etwa 15%.

8. Verfahren nach Anspruch 6, dadurch gekennzeichnet, daß die eingesetzte Menge Kaliumchlorid etwa 75%, die eingesetzte Menge Maltodextrin etwa 20% und die eingesetzte Menge Natriumchlorid etwa 5% beträgt.

9. Verfahren nach Anspruch 6, dadurch gekennzeichnet, daß die eingesetzte Menge Kaliumchlorid etwa 72%, die eingesetzte Menge Maltodextrin etwa 20% und die eingesetzte Menge Natriumchlorid etwa 8% beträgt.

10. Verfahren nach Anspruch 1, dadurch gekennzeichnet, daß die abgeschiedene Beschichtung ein

(i) Maltodextrin und

(ii) Kaliumbitartrat

enthaltendes Gemisch aufweist, das Dextrose-Aquivalent (D.E.) der Gesamtmenge aus Kaliumchlorid, Maltodextrin und Kaliumbitartrat nicht mehr als 10 D.E.-Einheiten beträgt und die Bestandteile in den angegebenen Prozentmengen eingesetzt werden:

Kaliumchlorid: von etwa 91 bis etwa 59%,

Maltodextrin: von etwa 1 bis etwa 40% und

Kaliumbitartrat: von etwa 0,1 bis etwa 0,9%,

wobei die Prozentmengen Gewichtsprozente, bezogen auf das Gesamtgewicht der genannten Komponenten sind.

11. Verfahren nach Anspruch 10, dadurch gekennzeichnet, daß die Bestandteile in den angegebenen Prozentmengen eingesetzt werden:

Kaliumchlorid: von etwa 40 bis etwa 69%,

Maltodextrin: von etwa 10 bis etwa 30% und

Kaliumbitartrat: von etwa 0,1 bis etwa 0,7%.

12. Verfahren nach Anspruch 10, dadurch gekennzeichnet, daß die eingesetzte Menge Kaliumchlorid etwa 79,6%, die eingesetzte Menge Maltodextrin etwa 20% und die eingesetzte Menge Kaliumbitartrat etwa 0,33% beträgt.

13. Verfahren nach einem der Ansprüche 1, 2, 10, 11 und 12, dadurch gekennzeichnet, daß der Kern und die abgeschiedene Beschichtung jeweils frei von Natriumchlorid sind.

14. Verfahren nach einem der Ansprüche 10 bis 12, dadurch gekennzeichnet, daß der abgeschiedene Kern ferner Natriumchlorid enthält und das Dextrose-Äquivalent (D.E.) der Gesamtmenge aus Kaliumchlorid, Maltodextrin, Kaliumbitartrat und Natriumchlorid nicht mehr als 10 D.E.-Einheiten beträgt.

15. Verfahren nach Anspruch 14, dadurch gekennzeichnet, daß die Bestandteile in den angegebenen Prozentmengen eingesetzt werden:

Kaliumchlorid: von etwa 91 bis etwa 19%,

Maltodextrin: von etwa 1 bis etwa 40%,

Kaliumbitartrat: von etwa 0,1 bis etwa 0,9% und

Natriumchlorid: bis zu etwa 50%,

wobei die Prozentmengen Gewichtsprozente, bezogen auf das Gesamtgewicht der genannten Komponenten sind.

16. Verfahren nach Anspruch 15, dadurch gekennzeichnet, daß die Komponenten in den angegebenen Prozentmengen eingesetzt werden:

Kaliumchlorid: von etwa 91 bis etwa 29%,

Maltodextrin: von etwa 10 bis etwa 30%,

Kaliumbitartrat: von etwa 0,1 bis etwa 0,7% und

Natriumchlorid: von etwa 0,1 bis etwa 50%.

17. Verfahren nach Anspruch 15, dadurch gekennzeichnet, daß die eingesetzte Menge Kaliumchlorid etwa 75,76%, die eingesetzte Menge Maltodextrin etwa 20%, die eingesetzte Menge Kaliumbitartrat etwa 0,33% und die eingesetzte Menge Natriumchlorid etwa 4% beträgt.

18. Verfahren nach Anspruch 15, dadurch gekennzeichnet, daß die eingesetzte Menge Kaliumchlorid etwa 71,67%, die eingesetzte Menge Maltodextrin etwa 20%, die eingesetzte Menge Kaliumbitartrat etwa 0,33% und die eingesetzte Menge Natriumchlorid etwa 8% beträgt.

19. Verfahren nach einem der Ansprüche 1 bis 18, dadurch gekennzeichnet, daß das Maltodextrin ein wasserlösliches Maltodextrin ist, das als wenigstens seinen größeren Teil ein oder mehrere Polysaccharide mit einem Polymerisationsgrad (D.P.) von wenigstens 10 enthält.

20. Verfahren nach einem der Ansprüche 1 bis 19, dadurch gekennzeichnet, daß das Maltodextrin ein Stärkehydrolysat ist.

21. Verfahren nach einem der Ansprüche 1 bis 20, dadurch gekennzeichnet, daß das Maltodextrin ein Dextrose-Äquivalent in dem Bereich von etwa 5 bis etwa 20 D.E.-Einheiten hat.

22. Verfahren nach Anspruch 21, dadurch gekennzeichnet, daß das Maltodextrin ein Dextrose-Äquivalent in dem Bereich von etwa 5 bis D.E.-Einheiten hat.

23. Verfahren nach Anspruch 22, dadurch gekennzeichnet, daß das Maltodextrin ein Dextrose-Äquivalent in dem Bereich von etwa 9 bis etwa 12 D.E.-Einheiten hat.

24. Verfahren nach einem der Ansprüche 1 bis 23, dadurch gekennzeichnet, daß das Maltodextrin nach Bestimmung durch Hochleistungsflüssigkeitschromatographie den folgenden Saccharidgehalt hat:

**0 130 821**

| Saccharide—nach Polymerisationsgrad | Menge | |
|---|---|---|
| | von etwa (%) | bis etwa (%) |
| DP1 | 0,3 | 0,8 |
| DP2 | 2,3 | 2,9 |
| DP3 | 4,2 | 5,0 |
| DP4 | 3,3 | 4,1 |
| DP5 | 2,7 | 3,4 |
| DP6 | 0,7 | 6,0 |
| DP7 | 6,5 | 8,3 |
| DP8 | 4,2 | 5,3 |
| DP9 | 2,8 | 3,6 |
| DP10 | 0,6 | 2,9 |
| DP (höher als 10) | 57 | 68 |

25. Verfahren nach Anspruch 24, dadurch gekennzeichnet, daß der Saccharidgehalt wie folgt ist:

| Saccharide—nach Polymerisationsgrad | Menge (%) |
|---|---|
| DP1 | etwa 0,5 |
| DP2 | etwa 2,7 |
| DP3 | etwa 4,3 |
| DP4 | etwa 3,7 |
| DP5 | etwa 3,1 |
| DP6 | etwa 7,1 |
| DP8 | etwa 4,5 |
| DP9 | etwa 3,1 |
| DP10 | etwa 1,6 |
| DP (höher als 10) | etwa 64 |

26. Verfahren nach einem der Ansprüche 1 bis 25, dadurch gekennzeichnet, daß man die Beschichtungsbedinungen so wählt, daß wenigstens 60% der Oberfläche des Kerns der beschichteten Teilchen mit der Beschichtung überzogen sind.

27. Verfahren nach Anspruch 26, dadurch gekennzeichnet, daß man die Beschichtungsbedingungen so wählt, daß wenigstens 80% der Oberfläche des Kerns der beschichteten Teilchen mit der Beschichtung überzogen sind.

28. Verfahren nach einem der Ansprüche 1 bis 27, dadurch gekennzeichnet, daß es die folgenden Stufen umfaßt:

(A) Schaffung eines Bettes aus Teilchen, die kristallines Kaliumchlorid enthalten,

(B) Rührung des Bettes und Erwärmung des Bettes auf eine Temperatur von etwa 120 bis etwa 140°C,

(C) Aufsprühung einer wässrigen Lösung, die Maltodextrin und wahlweise Natriumchlorid, Kaliumbitartrat oder ein Gemisch daraus enthält, auf das Bett, während dieses unter Rührung auf der genannten Temperatur gehalten wird,

(D) Entfernung von während der Aufsprühstufe gebildetem Wasserdampf von dem Bett und

24

**0 130 821**

(E) Gewinnung eines Salzersatz-Präparats mit beschichteten Teilchen aus
(1) einem Kaliumchlorid enthaltenden Kern und
(2) einer Beschichtung auf dem Kern,
die Maltodextrin und wahlweise Natriumchlorid, Kaliumbitartrat oder ein Gemisch daraus enthält.

**Revendications pour les Etats Contractants: BE, CH, DE, FR, GB, IT, LI, LU, NL, SE**

1. Composition de substitut du sel qui comprend des particules revêtues, chaque particule comprenant:
(a) un noyau comprenant du chlorure de potassium, et
(b) un revêtement sur ledit noyau, ledit revêtement comprenant de la maltodextrine,
dans laquelle l'équivalent en dextrose (E.D.) du noyau et du revêtement combinés n'est pas supérieur à 10 unités E.D.

2. Composition selon la revendication 1, dans laquelle le revêtement comprend de la maltodextrine et est dépourvu de chlorure de sodium, dans laquelle l'équivalent en dextrose (E.D.) de la quantité combinée de chlorure de potassium et de maltodextrine n'est pas supérieur à 10 unités E.D. et dans laquelle les composants sont présents en les pourcentages indiqués ci-dessous:
chlorure de potassium: d'environ 99 à environ 60%, et
maltodextrine: d'environ 1 à environ 40%,
les pourcentages étant en poids par rapport au poids combiné desdits composants.

3. Composition selon la revendication 2, dans laquelle les composants sont présents en les pourcentages suivants:
chlorure de potassium: d'environ 90 à environ 70%, et
maltodextrine: d'environ 10 à environ 30%.

4. Composition selon la revendication 3, dans laquelle les composants sont présents en les pourcentages suivants:
chlorure de potassium: d'environ 85 à environ 80%, et
maltodextrine: d'environ 15 à environ 20%.

5. Composition selon la revendication 4, dans laquelle les composants sont présents en les pourcentages suivants:
chlorure de potassium: environ 80%, et
maltodextrine: environ 20%.

6. Composition selon la revendication 1, dans laquelle le revêtement comprend un mélange contenant:
(i) de la maltodextrine ayant un équivalent en dextrose d'environ 5 à environ 20 unités E.D., et
(ii) du chlorure de sodium,
dans laquelle l'équivalent en dextrose (E.D.) de la quantité combiné de chlorure de potassium, de maltodextrine et de chlorure de sodium n'est pas supérieur à 10 unités E.D. et dans laquelle les ingrédients sont présents en les pourcentages suivants:
chlorure de potassium: d'environ 90 à environ 17%,
maltodextrine: d'environ 7 à environ 30%, et
chlorure de sodium: d'environ 0,1 à environ 75%,
les pourcentages étant en poids par rapport au poids combiné desdits ingrédients.

7. Composition selon la revendication 6, dans laquelle les ingrédients sont présents en les pourcentages suivants:
chlorure de potassium: d'environ 85 à environ 65%,
maltodextrine: d'environ 15 à environ 20%, et
chlorure de sodium: d'environ 0,2 à environ 15%.

8. Composition selon la revendication 6, dans laquelle la quantité de chlorure de potassium est d'environ 75%, la quantité de maltodextrine est d'environ 20% et la quantité de chlorure de sodium est d'environ 5%.

9. Composition selon la revendication 6, dans laquelle la quantité de chlorure de potassium est d'environ 72%, la quantité de maltodextrine est d'environ 20% et la quantité de chlorure de sodium est d'environ 8%.

10. Composition selon la revendication 1, dans laquelle le revêtement comprend un mélange contenant:
(i) de la maltodextrine, et
(ii) de la crème de tartre
dans laquelle l'équivalent en dextrose (E.D.) de la quantité combinée de chlorure de potassium, de maltodextrine et de crème de tartre n'est pas supérieur à 10 unités E.D. et dans laquelle les composants sont présents en les pourcentages suivants:
chlorure de potassium: d'environ 91 à environ 59%,
maltodextrine: d'environ 1 à environ 40%, et
crème de tartre: d'environ 0,1 à environ 0,9%,
les pourcentages étant en poids par rapport au poids combiné desdits composants.

11. Composition selon la revendication 10, dans laquelle les composants sont présents en les pourcentages suivants:

chlorure de potassium: d'environ 40 à environ 69%,

maltodextrine: d'environ 10 à environ 30%, et

crème de tartre: d'environ 0,1 à environ 0,7%.

12. Composition selon la revendication 10, dans laquelle la quantité de chlorure de potassium est d'environ 79,67%, la quantité de maltodextrine est d'environ 20% et la quantité de crème de tartre est d'environ 0,33%.

13. Composition selon l'une quelconque des revendications 1, 2, 10, 11 et 12, laquelle composition est dépourvue de chlorure de sodium.

14. Composition selon l'une quelconque des revendications 10 à 12, dans laquelle ledit mélange comprend de plus du chlorure de sodium et l'équivalent en dextrose (E.D.) de la quantité combiné de chlorure de potassium, de maltodextrine, de crème de tartre et de chlorure de sodium n'est pas supérieur à 10 unités E.D.

15. Composition selon la revendication 14, dans laquelle les composants sont présents en les pourcentages suivants:

chlorure de potassium: d'environ 91 à environ 19%,

maltodextrine: d'environ 1 à environ 40%,

crème de tartre: d'environ 0,1 à environ 0,9%, et

chlorure de sodium: jusqu'à environ 50%,

les pourcentages étant en poids par rapport au poids combiné desdits composants.

16. Composition selon la revendication 15, dans laquelle les composants sont présents en les pourcentages suivants:

chlorure de potassium: d'environ 91 à environ 29%,

maltodextrine: d'environ 10 à environ 30%,

crème de tartre: d'environ 0,1 à environ 0,7%, et

chlorure de sodium: d'environ 0,1 à environ 50%.

17. Composition selon la revendication 15, dans laquelle la quantité de chlorure de potassium est d'environ 75,67%, la quantité de maltodextrine est d'environ 20%, la quantité de crème de tartre est d'environ 0,33% et la quantité de chlorure de sodium est d'environ 4%.

18. Composition selon la revendication 15, dans laquelle la quantité de chlorure de potassium est d'environ 71,67%, la quantité de maltodextrine est d'environ 20%, la quantité de crème de tartre est d'environ 0,33% et la quantité de chlorure de sodium est d'environ 8%.

19. Composition selon l'une quelconque des revendications 1 à 18, dans laquelle ladite maltodextrine est une maltodextrine soluble dans l'eau contenant au moins comme portion majeure un ou plusieurs polysaccharides ayant un degré de polymérisation (D.P.) d'au moins 10.

20. Composition selon l'une quelconque des revendications 1 à 19, dans laquelle ladite maltodextrine est un hydrolysat d'amidon.

21. Composition selon l'une quelconque des revendications 1 à 20, dans laquelle ladite maltodextrine a un E.D. dans la gamme d'environ 5 à environ 20 unités E.D.

22. Composition selon la revendication 21, dans laquelle ladite maltodextrine a un E.D. dans la gamme d'environ 5 à environ 15 unités E.D.

23. Composition selon la revendication 22, dans laquelle ladite maltodextrine a un E.D. dans la gamme d'environ 9 à environ 12 unités E.D.

24. Composition selon l'une quelconque des revendication 1 à 23, dans laquelle ladite maltodextrine a la teneur suivante en saccharides comme déterminé par chromatographie liquid haute performance:

**0 130 821**

| Saccharides par degré de polymérisation | Quantité | |
|---|---|---|
| | d'environ % | à environ (%) |
| DP1 | 0,3 | 0,8 |
| DP2 | 2,3 | 2,9 |
| DP3 | 4,2 | 5,0 |
| DP4 | 3,3 | 4,1 |
| DP5 | 2,7 | 3,4 |
| DP6 | 0,7 | 6,0 |
| DP7 | 6,5 | 8,3 |
| DP8 | 4,2 | 5,3 |
| DP9 | 2,8 | 3,6 |
| DP10 | 0,6 | 2,9 |
| DP (supérieur à 10) | 57 | 68 |

25. Composition selon la revendication 24, dans laquelle ladite teneur en saccharides est la suivante:

| Saccharides par degré de polymérisation | Quantité (%) |
|---|---|
| DP1 | environ 0,5 |
| DP2 | environ 2,7 |
| DP3 | environ 4,3 |
| DP4 | environ 3,7 |
| DP5 | environ 3,1 |
| DP6 | environ 5,0 |
| DP7 | environ 7,1 |
| DP8 | environ 4,5 |
| DP9 | environ 3,1 |
| DP10 | environ 1,6 |
| DP (supérieur à 10) | environ 64 |

26. Composition selon l'une quelconque des revendications 1 à 25, dans laquelle au moins 60% de la surface dudit noyau sont recouverts dudit revêtement.

27. Composition selon la revendication 26, dans laquelle au moins 80% de la surface dudit noyau sont recouverts dudit revêtement.

28. Procédé pour préparer une composition de substitut du sel selon la revendication 1, ledit procédé comprenant les stades consistant à:

(A) se pourvoir d'un lit de particules comprenant du chlorure de potassium cristallin;

(B) agiter ledit lit et chauffer ledit lit à une température d'environ 120° à environ 140°C;

(C) pulvériser une solution aqueuse contenant de la maltodextrine et facultivement du chlorure de sodium, de la crème de tartre ou un de leurs mélanges sur ledit lit en maintenant ledit lit sous agitation et à ladite température;

(D) éliminer dudit lit la vapeur d'eau qui est formée pendant ledit stade de pulvérisation; et

27

# 0 130 821

(E) récupérer une composition de substitut du sel en particules revêtues, chaque particule comprenant:
(1) un noyau comprenant du chlorure de potassium, et
(2) un revêtement sur ledit noyau, ledit revêtement comprenant de la maltodextrine et facultivement du chlorure de sodium, de la crème de tartre ou un de leurs mélanges.

**Revendications pour l'Etat Contractant: AT**

1. Procédé pour la fabrication d'une composition de substitut du sel qui est caractérisé en ce qu'il comprend le dépôt sur
un noyau comprenant du chlorure de potassium,
d'un revêtement comprenant de la maltodextrine de façon à former les particules revêtues
dans lequel l'équivalent en dextrose (E.D.) du noyau et du revêtement combinés n'est pas supérieur à 10 unités E.D.

2. Procédé selon la revendication 1, caractérisé en ce que le revêtement déposé comprend de la maltodextrine et est dépourvu de chlorure de sodium, en ce que l'équivalent en dextrose (E.D.) de la quantité combinée de chlorure de potassium et de maltodextrine n'est pas supérieur à 10 unités E.D. et en ce que les composants sont utilisés en les pourcentages suivants:
chlorure de potassium: d'environ 99 à environ 60%, et
maltodextrine: d'environ 1 à environ 40%,
les pourcentages étant en poids par rapport au poids combiné desdits composants.

3. Procédé selon la revendication 2, caractérisé en ce que les composants sont utilisés en les pourcentages suivants:
chlorure de potassium: d'environ 90 à environ 70%, et
maltodextrine: d'environ 10 à environ 30%.

4. Procédé selon la revendication 3, caractérisé en ce que les composants sont utilisés en les pourcentages suivants:
chlorure de potassium: d'environ 85 à environ 80%, et
maltodextrine: d'environ 15 à environ 20%.

5. Procédé selon la revendication 4, caractérisé en ce que les composants sont utilisés en les pourcentages suivants:
chlorure de potassium: environ 80%, et
maltodextrine: environ 20%.

6. Procédé selon la revendication 1, caractérisé en ce que le revêtement déposé comprend un mélange contenant:
(i) de la maltodextrine ayant un équivalent en dextrose d'environ 5 à environ 20 unités E.D., et
(ii) du chlorure de sodium,
en ce que l'équivalent en dextrose (E.D.) de la quantité combinée de chlorure de potassium, de maltodextrine et de chlorure de sodium n'est pas supérieur à 10 unités E.D. et en ce que les ingrédients sont utilisés en les pourcentages suivants:
chlorure de potassium: d'environ 90 à environ 17%,
maltodextrine: d'environ 7 à environ 30%, et
chlorure de sodium: d'environ 0,1 à environ 75%,
les pourcentages étant en poids par rapport au poids combiné desdits ingrédients.

7. Procédé selon la revendication 6, caractérisé en ce que les ingrédients sont utilisés en les pourcentages suivants:
chlorure de potassium: d'environ 85 à environ 65%,
maltodextrine: d'environ 15 à environ 20%, et
chlorure de sodium: d'environ 0,2 à environ 15%.

8. Procédé selon la revendication 6, caractérisé en ce que la quantité de chlorure de potassium utilisée est d'environ 75%, la quantité de maltodextrine utilisée est d'environ 20% et la quantité de chlorure de sodium utilisée est d'environ 5%.

9. Procédé selon la revendication 6, caractérisé en ce que la quantité de chlorure de potassium utilisée est d'environ 72%, la quantité de maltodextrine utilisée est d'environ 20% et la quantité de chlorure de sodium utilisée est d'environ 8%.

10. Procédé selon la revendication 1, caractérisé en ce que le revêtement déposé comprend un mélange contenant:
(i) de la maltodextrine, et
(ii) de la crème de tartre,
en ce que l'équivalente en dextrose (E.D.) de la quantité combinée de chlorure de potassium, de maltodextrine et de crème de tartre n'est pas supérieur à 10 unités E.D. et en ce que les composants sont utilisés en les pourcentages suivants:
chlorure de potassium: d'environ 91 à environ 59%,
maltodextrine: d'environ 1 à environ 40%, et
crème de tartre: d'environ 0,1 à environ 0,9%,
les pourcentages étant en poids par rapport au poids combiné desdits composants.

28

11. Procédé selon la revendication 10, caractérisé en ce que les composants sont utilisées en les pourcentages suivants:

chlorure de potassium: d'environ 40 à environ 69%,

maltodextrine: d'environ 10 à environ 30%, et

crème de tartre: d'environ 0,1 à environ 0,7%.

12. Procédé selon la revendication 10, caractérisé en ce que la quantité de chlorure de potassium utilisée est d'environ 79,6%, la quantité de maltodextrine utilisée est d'environ 20% et la quantité de crème de tartre utilisé est d'environ 0,33%.

13. Procédé selon l'une quelconque des revendications 1, 2, 10, 11 et 12, caractérisé en ce que le noyau et le revêtement déposé sont chacun dépourvus de chlorure de sodium.

14. Procédé selon l'une quelconque des revendications 10 à 12, caractérisé en ce que le revêtement déposé comprend de plus du chlorure de sodium et en ce que l'équivalent en dextrose (E.D.) de la quantité combinée de chlorure de potassium, de maltodextrine, de crème de tartre et de chlorure de sodium n'est pas supérieur à 10 unités E.D.

15. Procédé selon la revendication 14, caractérisé en ce que les composants sont utilisés en les pourcentages suivantes:

chlorure de potassium: d'environ 91 à environ 19%,

maltodextrine: d'environ 1 à environ 40%,

crème de tartre: d'environ 0,1 à environ 0,9%, et

chlorure de sodium: jusqu'à environ 50%,

les pourcentages étant en poids par rapport au poids combiné desdits composants.

16. Procédé selon la revendication 15, caractérisé en ce que les composants sont utilisés en les pourcentages suivants:

chlorure de potassium: d'environ 91 à environ 29%,

maltodextrine: d'environ 10 à environ 30%,

crème de tartre: d'environ 0,1 à environ 0,7%, et

chlorure de sodium: d'environ 0,1 à environ 50%.

17. Procédé selon la revendication 15, caractérisé en ce que la quantité de chlorure de potassium utilisée est d'environ 75,67%, la quantité de maltodextrine utilisée est d'environ 20%, la quantité de crème de tartre utilisée est d'environ 0,33% et la quantité de chlorure de sodium utilisée est d'environ 4%.

18. Procédé selon la revendication 15, caractérisé en ce que la quantité de chlorure de potassium utilisée est d'environ 71,67%, la quantité de maltodextrine utilisée est d'environ 20%, la quantité de crème de tartre utilisée est d'environ 0,33% et la quantité de chlorure de sodium utilisée est d'environ 8%.

19. Procédé selon l'une quelconque des revendications 1 à 18, caractérisé en ce que ladite maltodextrine est une maltodextrine soluble dans l'eau comprenant au moins, comme portion majeure, un ou plusieurs polysaccharides ayant un degré de polymérisation (D.P.) d'au moins 10.

20. Procédé selon l'une quelconque des revendications 1 à 19, caractérisé en ce que ladite maltodextrine est un hydrolysat d'amidon.

21. Procédé selon l'une quelconque des revendications 1 à 20, caractérisé en ce que ladite maltodextrine a un E.D. dans la gamme d'environ 5 à environ 20 unités E.D.

22. Procédé selon la revendication 21, caractérisé en ce que ladite maltodextrine a un E.D. dans la gamme d'environ 5 à 15 unités E.D.

23. Procédé selon la revendication 22, caractérisé en ce que ladite maltodextrine a un E.D. dans la gamme d'environ 9 à environ 12 unités E.D.

24. Procédé selon l'une quelconque des revendications 1 à 23, caractérisé en ce que ladite maltodextrine a la teneur suivante en saccharides comme déterminé par chromatographie liquide haute performance:

| Saccharides par degré de polymérisation | Quantité | |
|---|---|---|
| | d'environ (%) | à environ (%) |
| DP1 | 0,3 | 0,8 |
| DP2 | 2,3 | 2,9 |
| DP3 | 4,2 | 5,0 |
| DP4 | 3,3 | 4,1 |
| DP5 | 2,7 | 3,4 |
| DP6 | 0,7 | 6,0 |
| DP7 | 6,5 | 8,3 |
| DP8 | 4,2 | 5,3 |
| DP9 | 2,8 | 3,6 |
| DP10 | 0,6 | 2,9 |
| DP (supérieur à 10) | 57 | 68 |

25. Procédé selon la revendication 24, caractérisé en ce que ladite teneur en saccharides est la suivante:

| Saccharides par degré de polymérisation | Quantité (%) |
|---|---|
| DP1 | environ 0,5 |
| DP2 | environ 2,7 |
| DP3 | environ 4,3 |
| DP4 | environ 3,7 |
| DP5 | environ 3,1 |
| DP6 | environ 5,0 |
| DP7 | environ 7,1 |
| DP8 | environ 4,5 |
| DP9 | environ 3,1 |
| DP10 | environ 1,6 |
| DP (supérieur à 10) | environ 64 |

26. Procédé selon l'une quelconque des revendications 1 à 25, caractérisé en ce que les conditions de revêtement sont choisies pour qu'au moins 60% de la surface dudit noyau desdites particules revêtues soient revêtus dudit revêtement.

27. Procédé selon la revendication 26, caractérisé en ce que les conditions de revêtement sont choisies pour qu'au moins 80% de la surface dudit noyau desdites particules revêtues soient revêtus dudit revêtement.

28. Procédé selon l'une quelconque des revendications 1 à 27, caractérisé en ce qu'il comprend les stades consistant à:
(A) se pourvoir d'un lit de particules comprenant du chlorure de potassium cristallin;
(B) agiter ledit lit et chauffer ledit lit à une température d'environ 120°C à environ 140°C;
(C) pulvériser une solution aqueuse contenant de la maltodextrine, et facultativement du chlorure de

30

sodium, de la crème de tartre ou un de leurs mélanges, sur ledit lit, en maintenant ledit lit sous agitation et à ladite température;

(D) éliminer dudit lit la vapeur d'eau qui y est formée pendant ledit stade de pulvérisation; et

(E) récupérer une composition de substitut du sel en particules revêtues, chaque particule comprenant:

(1) un noyau comprenant du chlorure de potassium, et

(2) un revêtement sur ledit noyau, ledit revêtement comprenant de la maltodextrine et facultativement du chlorure de sodium, de la crème de tartre ou un de leurs mélanges.